# EUROPÄISCHE PATENTSCHRIFT

(11) **EP 1 902 982 B1**
(45) Veröffentlichungstag und Bekanntmachung des Hinweises auf die Patenterteilung: **19.11.2008**
(21) Anmeldenummer: 06400031.8
(22) Anmeldetag: 25.09.2006
(51) Int. Cl.: B65G 47/88

(54) **Anschlagmodul**
Stop module
Module butée

(43) Veröffentlichungstag der Anmeldung: 26.03.2008
(73) Patentinhaber: Wörner, Helmut, 73770 Denkendorf (DE); Unterhuber, Sebastian, 73257 Köngen (DE)
(72) Erfinder: Unterhuber, Sebastian, 73257 Köngen (DE)
(74) Vertreter: Vogler, Bernd

(56) Entgegenhaltungen:
- EP-A2- 1 522 383
- DE-A1- 3 003 674
- DE-A1- 19 543 797
- FR-A- 2 856 998
- US-A- 5 154 277
- US-A- 6 112 877
- US-A1- 2003 173 187

## Beschreibung

Die Erfindung betrifft ein Anschlagmodul, insbesondere für automatische Bearbeitungs- und Fördereinrichtungen, mit einem an einer Grundeinheit angeordneten Anschlagglied für sich in einer Bewegungsebene in einer aktuellen Arbeitsbewegungsrichtung bewegende Gegenstände, das mittels eines Stellglieds zwischen einer in die Bewegungsebene befindlichen Anschlagstellung und einer unterhalb der Bewegungsebene liegenden Freigabestellung bewegbar ist, wobei eine Führungseinrichtung vorgesehen ist, mit wenigstens einer Führungsbahn auf der das Anschlagglied an einer ersten Stelle zwischen der Anschlagstellung und der Freigabestellung zwangsgeführt ist, wobei das Anschlagglied an einer von der ersten Stelle entfernten zweiten Stelle mit einem Stellelement derart schwenkbar verbunden ist, dass bei einer Absenkbewegung des Anschlagglieds von der Anschlagstellung in die Freigabestellung ein Verschwenken des Anschlagglieds in Arbeitsbewegungsrichtung erfolgt, wobei das Stellglied über Kraftübersetzungsmittel in Form einer Hebeleinrichtung mit dem Anschlagglied gekoppelt ist.

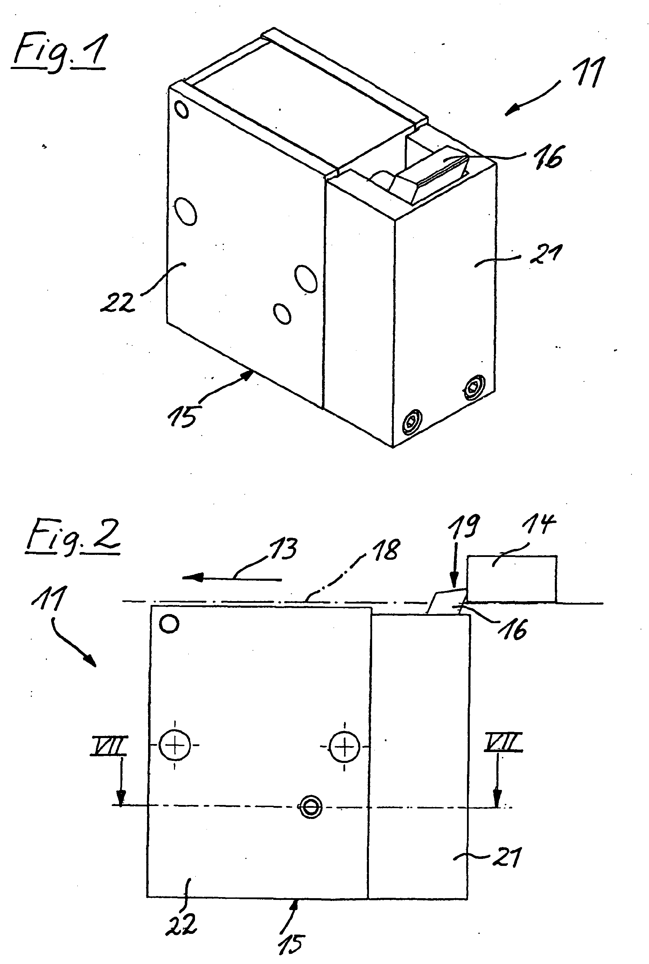

In der US 5,154,277 ist ebenfalls ein Anschlagmodul offenbart. Es ist hier ein Grundkörper vorgesehen, der zwei Anschlagklinken aufweist. Der Grundkörper weist zwei Führungsnuten auf, die in Eingriff mit zwei Führungsbolzen stehen. An der Unterseite des Grundkörpers ist eine Anlagefläche für eine Rolle vorgesehen, die darauf abläuft. Die Rolle sitzt an einem Hebel, der seinerseits mit einem fluidbetätigten Arbeitszylinder verbunden ist. Wie insbesondere in den Figuren 1 und 2 gezeigt, schwenkt der Grundkörper um sich selber, wenn die Rolle auf der Anlagefläche abrollt, was bei Betätigung des Arbeitszylinders der Fall ist. Hierbei wird eine der Klinken in Arbeitsbewegungsrichtung aus der Bewegungsbahn der Gegenstände weggeschwenkt.

Ein Anschlagmodul ist auch aus der EP 0 484 648 bekannt. Der dort beschriebene Anschlag ist mittels eines pneumatisch betätigbaren Stellkolbens aus der Bewegungsbahn anfahrender Werkstücke heraus und in diese zurückbewegbar. Für die Druckluftbeaufschlagung ist am Gehäuse ein Druckluftanschluss vorgesehen, über den gesteuert Druckluft zugeführt wird. Ferner ist dem Anschlag eine Dämpfungseinrichtung zugeordnet, so dass die Bewegung der angeschlagenen Werkstücke abgedämpft werden kann.

In der Regel sind automatische Bearbeitungs- und Fördereinrichtungen, für die das Anschlagmodul in bevorzugter Weise eingesetzt wird, ständig in Betrieb, so dass ein angeschlagener Gegenstand in Arbeitsbewegungsrichtung auf das Anschlagglied gedrückt wird. Durch die Anpresskraft, die vom Gegenstand auf das Anschlagglied ausgeübt wird, entsteht bei der Absenkbewegung des Anschlagglieds nicht unerhebliche Reibung. Der vom Stellglied zu leistende Kraftaufwand für das Absenken des Anschlagglieds ist dementsprechend groß.

Aufgabe der Erfindung ist es, ein Anschlagmodul der eingangs erwähnten Art zu schaffen, bei der das Absenken des Anschlagsglieds mit geringerem Kraftaufwand möglich ist.

Diese Aufgabe wird durch ein Anschlagmodul mit den Merkmalen des unabhängigen Anspruchs 1 gelöst. Weiterbildungen der Erfindung sind in den Unteransprüchen dargestellt.

Das erfindungsgemäße Anschlagmodul zeichnet sich dadurch aus, dass eine vom Stellglied erzeugte Antriebskraft in eine am Anschlagglied abgreifbare größere Kraft übersetzbar ist, wobei die Hebeleinrichtung einen ersten Hebel, der einerseits gelenkig am Stellglied gelagert und linear verschieblich ist und andererseits an einem zweiten Hebel gelenkig gelagert ist, aufweist, wobei Letzterer einerseits um eine an der Grundeinheit ausgebildete, ortsfeste Schwenkachse schwenkbar und andererseits gelenkig am Anschlagglied gelagert ist.

Bei dem vorstehend erwähnten Stand der Technik in Form der EP 0 484 648 wird das Absenken des Anschlagglieds durch eine rein vertikale Absenkbewegung durchgeführt. Beim Absenken des Anschlagglieds entsteht folglich auf Grund des Anpressdrucks des angeschlagenen Gegenstands hohe Reibung. Der vom Stellglied zu leistende Kraftaufwand ist hoch. Bei der Erfindung hingegen wird das Anschlagglied beim Absenken in Arbeitsbewegungsrichtung verschwenkt, so dass der angeschlagene Gegenstand bereits beim Absenken des Anschlagglieds, wenn sich dieses noch in der Bewegungsebene befindet, in Arbeitsbewegungsrichtung weitertransportierbar ist. Das Anschlagglied kann also in Arbeitsbewegungsrichtung ein Stück mitbewegt werden, wodurch sich die Reibung zwischen dem angeschlagenen Gegenstand und dem Anschlagglied beim Absenken verringert. Es ist sogar möglich, dass die vom angeschlagenen Gegenstand auf das Anschlagglied ausgeübte Kraft im Falle von ständig laufenden automatischen Bearbeitungs- und Fördereinrichtungen ein Verschwenken des Anschlagglieds in Arbeitsbewegungsrichtung bewirkt.

Bei einer Weiterbildung der Erfindung verläuft die Führungsbahn zumindest teilweise schräg zur Bewegungsebene der Gegenstände. Dadurch ist es möglich, dem Anschlagglied an seiner ersten Stelle eine schräg gerichtete Absenkbewegung aufzuzwingen. Alternativ ist es möglich, die Führungsbahn vertikal, also senkrecht zur Bewegungsebene anzuordnen. Auch hier müsste das Anschlagglied an der zweiten Stelle schwenkbar mit dem Stellelement verbunden sein, so dass es bei der an der ersten Stelle stattfindenden vertikalen Abwärtsbewegung um die erste Stelle verschwenkbar in Arbeitsbewegungsrichtung wegschwenkt.

Bei einer Weiterbildung der Erfindung weist das Anschlagglied an seinem oberen Ende eine Anschlagkontur für die Gegenstände auf, die bei der Bewegung des Anschlagglieds zwischen der Anschlagstellung und der Freigabestellung eine Bahnkurve durchläuft, insbesondere oberhalb der Bewegungsebene in Arbeitsbewegungsrichtung. Der Kontakt zwischen angeschlagenem Gegenstand und Anschlagglied ist zweckmäßigerweise linienförmig, kann aber auch flächenförmig sein.

Besonders bevorzugt weist die Führungseinrichtung eine Kulissenführung auf, mit wenigstens einer an der Grundeinheit angeordneten Führungskulisse, in der wenigstens ein am Anschlagglied an der ersten Stelle ausgebildetes Führungsglied zwangsgeführt ist. Die Führungskulisse kann von einer Führungsnut und das Führungsglied von einem Führungsbolzen gebildet werden.

In besonders bevorzugter Weise ist eine mit dem Anschlagglied verbundene Dämpfungseinrichtung zur gedämpften Bewegung des Anschlagglieds von einer in Arbeitsbewegungsrichtung vor der Anschlagstellung liegenden Voranschlagstellung bis zur Anschlagstellung vorgesehen. Dabei kann das Anschlagglied bei seiner Abwärtsbewegung von der Anschlagstellung in die Freigabestellung durch den Verlauf der Führungsbahn in eine Position gebracht werden, so dass es bei der anschließenden Aufwärtsbewegung wieder seine Vorausschlagstellung einnimmt.

Das Stellglied ist über Kraftübersetzungsmittel mit dem Anschlagglied gekoppelt, wobei eine vom Stellglied erzeugte Antriebskraft in eine am Anschlagglied abgreifbare größere Kraft übersetzbar ist. Dadurch ist es möglich, auch Stellglieder zu verwenden, die relativ geringe Antriebskräfte erzeugen und dementsprechend geringe Bauabmessungen aufweisen können. Dadurch ist es möglich, die Baugröße, die maßgeblich durch die Baugröße des Stellglieds bestimmt wird, relativ klein zu halten.

Die Kraftübersetzungsmittel werden von einer Hebelübersetzung gebildet.

Als Hebelübersetzung ist eine Hebeleinrichtung vorgesehen, die mit dem Anschlagglied verbunden ist, mit einem ersten Hebel, der einerseits gelenkig am Stellglied gelagert und linear verschieblich ist und andererseits an einem als Stellelement ausgebildeten zweiten Hebel gelenkig gelagert ist, wobei Letzterer einerseits um eine an der Grundeinheit ausgebildeten, ortsfesten Schwenkachse schwenkbar und andererseits gelenkig am Anschlagglied gelagert ist.

Bei einer Weiterbildung der Erfindung weist das Stellglied ein Antriebselement zur Erzeugung einer parallel zur Bewegungsebene gerichteten linearen Antriebsbewegung auf, die über Umsetzmittel in eine zwischen der Anschlagstellung und der Freigabestellung des Anschlagglieds stattfindenden Anschlaggliedbewegung umsetzbar ist.

Beim vorerwähnten Stand der Technik findet die Antriebsbewegung in vertikaler Richtung, d.h. senkrecht zur Bewegungsebene statt. Der Hubweg des Antriebselements erstreckt sich also in vertikaler Richtung und beeinflusst somit maßgeblich die Bauhöhe des Antriebsmoduls. Hingegen sind die Auswirkungen auf die Bauhöhe bei parallel zur Bewegungsebene gerichteter linearer Antriebsbewegung weit geringer.

Vorzugsweise ist das Antriebselement in einer parallel zur Bewegungsebene in der Grundeinheit ausgebildeten Antriebsaufnahme linear verschieblich angeordnet. In besonders bevorzugter Weise ist das Stellglied mit seiner Längsseite im Wesentlichen parallel zur Bewegungsebene ausgerichtet in der Antriebsaufnahme angeordnet.

Bevorzugte Ausführungsbeispiele der Erfindung sind in der Zeichnung dargestellt und werden im Folgenden näher erläutert. In der Zeichnung zeigen:
- Figur 1: ein erstes Ausführungsbeispiel des erfindungsgemäßen Anschlagmoduls in perspektivischer Ansicht,
- Figur 2: das Anschlagmodul von Figur 1 in Seitenansicht,
- Figur 3: das Anschlagmodul von Figur 1 in Rückansicht, entgegen der Arbeitsbewegungsrichtung der Gegenstände,
- Figur 4: das Anschlagmodul von Figur 3 im Längsschnitt entlang der Linie IV-IV aus Figur 3,
- Figur 5: eine Rückansicht auf das Anschlagmodul von Figur 1, wobei sich das Anschlagglied im eingefahrenen Zustand befindet,
- Figur 6: das Anschlagmodul von Figur 5 im Längsschnitt entlang der Linie VI-VI aus Figur 5,
- Figur 7: das Anschlagmodul von Figur 2 im Schnitt entlang der Linie VII-VII aus Figur 2,
- Figur 8: ein zweites Ausführungsbeispiel des erfindungsgemäßen Anschlagmoduls im Längsschnitt,
- Figur 9: ein drittes Ausführungsbeispiel des erfindungsgemäßen Anschlagmoduls im Längsschnitt und
- Figuren 10A bis 10C: eine schematische Darstellung des erfindungsgemäßen Anschlagmoduls im Einsatz an einer automatischen Fördereinrichtung, wobei in drei aufeinanderfolgenden Schritten A bis C die Freigabe eines angeschlagenen Gegenstandes durch Absenken des Anschlagglieds dargestellt ist.

Die Figuren 1 bis 7 zeigen ein erstes Ausführungsbeispiel des erfindungsgemäßen Anschlagmoduls 11, das im Folgenden beispielhaft anhand eines solchen mit Dämpfungseinrichtung 12 erläutert wird. Es ist jedoch auch möglich, ein Anschlagmodul ohne Dämpfungseinrichtung zu verwenden.

Das Anschlagmodul 11 wird vorzugsweise in automatischen Bearbeitungs- und Fördereinrichtungen 70 eingesetzt, um sich in einer Bewegungsebene 18 in einer Arbeitsbewegungsrichtung 13 bewegende Gegenstände 14, beispielsweise Werkstücke oder dergleichen, zu vereinzeln. Nach der Vereinzelung können die Gegenstände 14 dann individuell behandelt, beispielsweise bearbeitet, umgeleitet usw. werden.

Das Anschlagmodul 11 besitzt eine beispielsweise quaderförmig ausgebildete Grundeinheit 15, an dem ein Anschlagglied 16 angeordnet ist, das mittels eines Stellglieds 17 aus der Bewegungsebene 18 der Gegenstände 14 heraus und in diese zurück bewegbar ist. Ferner ist noch die bereits erwähnte Dämpfungseinrichtung 12 vorgesehen, mittels der das Anschlagglied 16 von einer in Arbeitsbewegungsrichtung 13 vor einer Anschlagstellung 20 liegenden Voranschlagstellung 19 bis zur Anschlagstellung 20 gedämpft bewegbar ist.

Es ist möglich, dass die Grundeinheit 15 aus einem Anschlaggliedträger 21, in dem das Anschlagglied 16 in nachfolgend noch näher beschriebener Weise untergebracht ist, und einem separat vom Anschlaggliedträger 21 ausgebildeten Stellgliedträger 22 besteht. Prinzipiell ist jedoch auch eine einteilig aufgebaute Grundeinheit 15 denkbar.

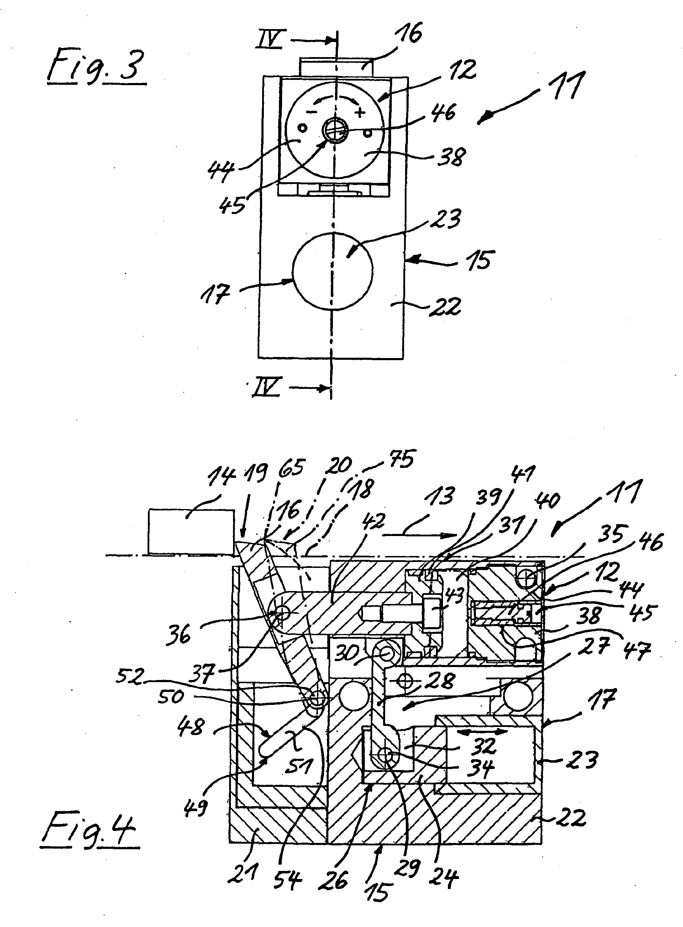

Wie insbesondere in Figur 4 dargestellt, ist als Stellglied 17 ein elektrischer Linearantrieb in Form eines Elektromagnet-Antriebs vorgesehen. Der Elektromagnet-Antrieb besitzt einen bestrombaren Elektromagneten 23, mit insbesondere U-förmigem Joch, in dem ein Antriebselement 24 in Form eines Ankers linear verschieblich geführt ist. Bei Bestromung des Elektromagneten wird der Anker zum Joch hingezogen, wodurch eine abgreifbare Antriebsbewegung erzeugt wird. Die Antriebsbewegung findet parallel zur Bewegungsebene 18 der Gegenstände 14 statt und wird über Umsetzmittel in nachfolgend näher beschriebener Weise auf das Anschlagglied 16 übertragen, das dadurch zwischen seiner Anschlagstellung 20 und einer unterhalb der Bewegungsebene liegenden Freigabestellung 25 bewegbar ist. Das als Anker ausgebildete Antriebselement 24 wird ferner noch linear in einer in der Grundeinheit 15, insbesondere im Stellgliedträger 22 ausgebildeten Antriebsaufnahme 26 geführt. Ferner ist der Elektromagnet 23 mit der Längsachse ebenfalls im Wesentlichen parallel zur Bewegungsebene 18 ausgerichtet in der Antriebsaufnahme 26 angeordnet. Die parallel zur Bewegungsebene 18 erzeugte lineare Antriebsbewegung hat den Vorteil, dass der Stellweg bzw. Hub des Antriebselements 24 in horizontaler Richtung verläuft und damit auf die Bauhöhe des Anschlagmoduls 11 keinen Einfluss nimmt. Auch der Elektromagnet 23 hat durch seine horizontale Lage relativ geringen Einfluss auf die Bauhöhe.

Eine weitere Verringerung der Bauhöhe und sogar der gesamten Baugröße des Anschlagmoduls 11 kann durch die Verwendung relativ klein dimensionierter Stellglieder 17 in Kombination mit Umsetzmitteln in Form von Kraftübersetzungsmitteln erfolgen, so dass auch eine vom Stellglied 17 erzeugte relativ geringe Antriebskraft zur Bewegung des Antriebsglieds ausreicht, da diese über die Kraftübersetzung in eine höhere Kraft übersetzt wird.

Als Kraftübersetzungsmittel ist eine Hebelübersetzung vorgesehen, mit einer Hebeleinrichtung 27, die zwischen dem Anker des Elektromagneten 23 und dem Anschlagglied 16 ausgebildet ist. Die Hebeleinrichtung 27 besitzt einen ersten Hebel 28, der einerseits um eine erste Schwenkachse 29 schwenkbar am Anker und andererseits um eine zweite Schwenkachse 30 schwenkbar mit einem zweiten Hebel 31 verbunden ist.

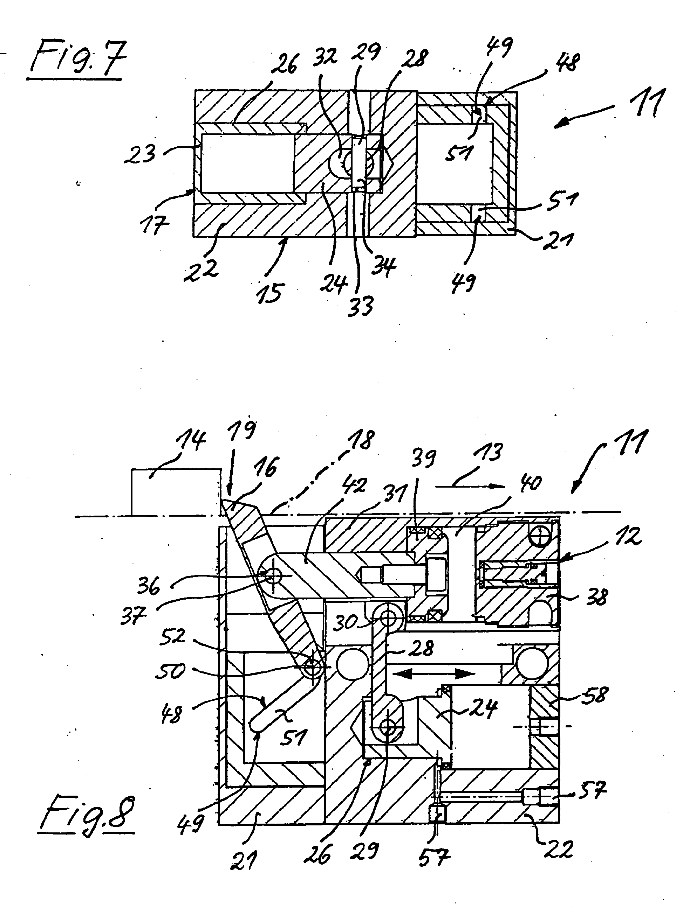

Wie insbesondere in Figur 7 dargestellt, befindet sich hierzu am Anker eine schlitzartige Öffnung 32 zur Aufnahme des Endes des ersten Hebels 28, wobei am Hebelende seinerseits wiederum eine Durchgangsöffnung 33 vorgesehen ist, durch die ein Bolzen 34 hindurchgeführt ist. Der Bolzen 34 wiederum ist am Anker drehbar gelagert und bildet mithin die erste Schwenkachse 29. Die Schwenklagerung am gegenüberliegenden Hebelende des ersten Hebels 28 kann in ähnlicher Weise erfolgen. Der zweite Hebel 31 ist einerseits an einer an der Grundeinheit 15 ausgebildeten ortsfesten dritten Schwenkachse 35 schwenkbar gelagert und andererseits an einer zweiten Stelle 36 über eine vierte Schwenkachse 37 schwenkbar mit dem Anschlagglied 16 verbunden.

Der zweite Hebel 31 wird von einem Dämpfungszylinder 38 der Dämpfungseinrichtung 12 gebildet. Dieser besitzt einen Zylinderraum 40, in dem ein Dämpfungskolben 39 verschiebbar geführt und mittels einer Kolbendichtungseinrichtung 41 gegen die Wandung des Zylinderraums 40 abgedichtet ist. Der Dämpfungskolben 39 ist mit einer Kolbenstange 42 über Befestigungsmittel, beispielsweise mittels einer Schraubverbindung 43, verbunden. Es ist selbstverständlich auch möglich, eine einstückige Verbindung zwischen Dämpfungskolben 39 und Kolbenstange 42 vorzusehen.

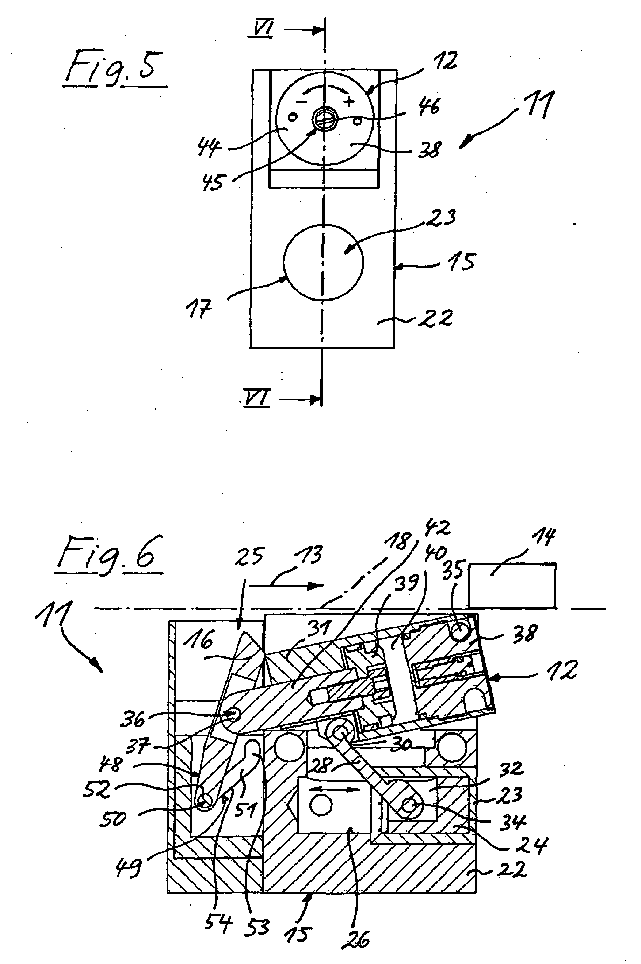

Am kolbenfernen Ende ist die Kolbenstange 42 wie erwähnt schwenkbar mit dem Anschlagglied 16 verbunden. Sie stellt somit das Stellelement für das Anschlagglied 16 dar. Zur Außenseite der Grundeinheit 15 hin ist der Zylinderraum 40 mit einem Deckel 44 verschlossen. Im Deckel 44 befindet sich eine Drosseleinrichtung 45, die einen Strömungswiderstand für die bei der Kolbenbewegung über einen nicht dargestellten Kanal ausströmende Luft bildet. Zur Feinjustierung der Dämpfungswirkung sind ferner Einstellmittel 46, beispielsweise eine in einem Deckelkanal 47 beweglich geführte Einstellschraube vorgesehen, mit der sich der Ausströmquerschnitt für die ausströmende Luft wahlweise verengen oder erweitern lässt, wodurch dann wiederum der Drosseleffekt erhöht oder vermindert wird, wobei letzterer wiederum die Dämpfungswirkung bestimmt. Wie insbesondere in den Figuren 3 und 5 dargestellt, wird durch Drehen an der Einstellschraube in Richtung "+" die Dämpfungswirkung erhöht, während durch Drehen der Einstellschraube in Richtung "-" die Dämpfungswirkung vermindert wird.

Das Anschlagglied 16 ist wie erwähnt an einer zweiten Stelle 36 schwenkbar mit der Kolbenstange 42 verbunden. Zusätzlich hierzu ist eine Führungseinrichtung 48 vorgesehen, mit wenigstens einer Führungsbahn 49, auf der das Anschlagsglied 16 an einer ersten Stelle 50 zwischen der Anschlagstellung 16 und der Freigabestellung 25 zwangsgeführt ist.

Wie insbesondere in Figur 6 dargestellt, weist die Führungseinrichtung 48 eine Kulissenführung auf, mit zwei an der Grundeinheit ausgebildeten Führungskulissen in Form von Führungsnuten 51 in denen ein am Anschlagglied 16 ausgebildetes Führungsglied in Form eines Führungsbolzens 52 zwangsgeführt ist. Der Führungsbolzen 52 kann sich in den Führungsnuten 51 verschwenken. Die Führungsnuten 51 besitzen jeweils einen Kopfbereich 53, der sich im Wesentlichen vertikal, also senkrecht zur Bewegungsebene 18 erstreckt. Dieser Kopfbereich 53 wird benötigt, da bereits bei der Bewegung des Anschlagglieds 16 von der Voranschlagstellung 19 in die Anschlagstellung 20 ein Verschwenken des Anschlagglieds 16 an der zweiten Stelle 36 um die vierte Schwenkachse 37 stattfindet, wobei auf Grund der Tatsache, dass die als Stellelement ausgebildete Kolbenstange 42 durch den Dämpfungskolben 39 im Zylinderraum 40 höhenunveränderlich zwangsgeführt ist, das Anschlagglied 16 ein Stück weit nach unten gedrückt wird. An den Kopfbereich 53 schließt sich mit einem Radius ein Führungsbereich 54 an, der sich entgegen der Arbeitsbewegungsrichtung 13 schräg abwärts erstreckt.

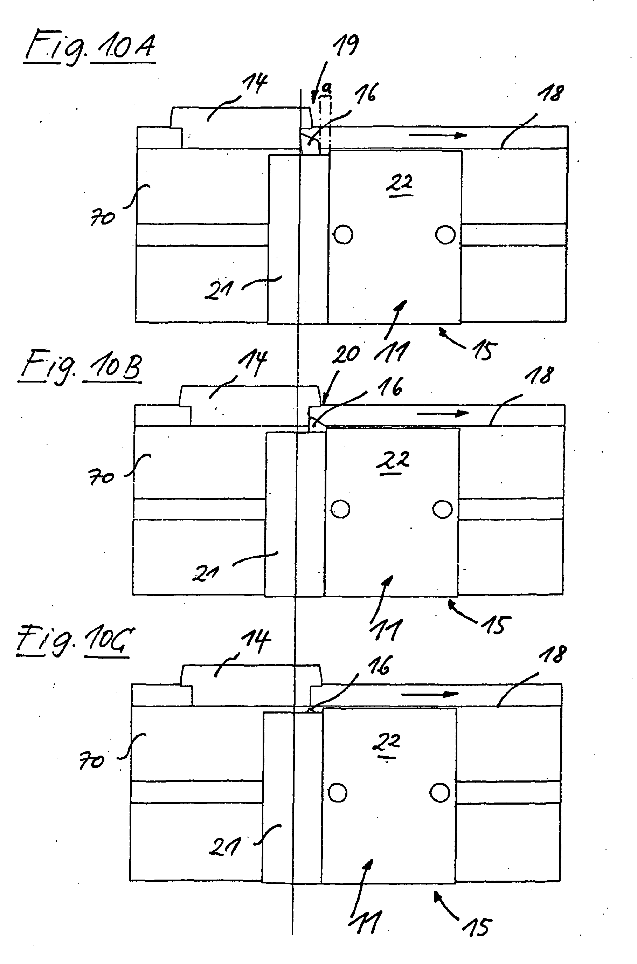

Wie in den Figuren 10A bis 10C dargestellt, besteht die Wirkungsweise des Anschlagmoduls darin, dass ein von rechts kommender Gegenstand 14, der beispielsweise auch ein Werkstück, insbesondere Maschinenteil oder dergleichen sein kann, zunächst die Voranschlagstellung 19 des Anschlagglieds 16 erreicht. Ein weiterer Vorteil ist, dass in der Voranschlagstellung 19 eine Selbsthemmung des Anschlagglieds 16 derart vorliegt, dass es nicht ohne Betätigung des Stellglieds 17 nach unten gedrückt werden kann. Durch das Auftreffen des Gegenstandes 14 wird der Dämpfungskolben 39 in den Zylinderraum 40 hineingeschoben, was zu einem abgedämpften Abbremsen des Gegenstands 14 bis zum Stillstand führt. Das Anschlagglied 16 wird in Arbeitsbewegungsrichtung 13 um die vierte Schwenkachse 37 verschwenkt und zwar so weit, bis der Dämpfungskolben 39 auf die Rückwand des Deckels 44 trifft, und somit sämtliche im Zylinderraum 40 befindliche Luft ausgeschoben ist. Eine Weiterbewegung des Dämpfungskolbens 39 in Arbeitsbewegungsrichtung 13 ist nicht mehr möglich, so dass hierdurch die Anschlagstellung 20 festgelegt ist. Wie insbesondere in Figur 10A dargestellt, ist die Rückseite des Anschlagglieds 16 in der Anschlagstellung 20 mit dem Abstand a vom Stellgliedträger 22 der Grundeinheit 15 beabstandet. Soll der Gegenstand 14 seine Bewegung in Arbeitsbewegungsrichtung 13 fortsetzen, so wird das Stellglied 17 aktiviert, in Falle des ersten Ausführungsbeispiels der Elektromagnet bestromt, so dass der Anker angezogen wird. Dabei erfolgt ein Verschwenken des ersten Hebels 28 um die erste Schwenkachse 29 bei deren gleichzeitig linearer Verschiebung. Da sich der erste Hebel 28 nicht verlängern kann, wird der Dämpfungszylinder 38 nach unten gezogen und schwenkt dabei gleichzeitig um die ortsfeste dritte Schwenkachse 35. Dies führt dazu, dass das Anschlagglied 16 in Arbeitsbewegungsrichtung 13 weiter um die vierte Schwenkachse verschwenkt wird. Dies hat den Vorteil, dass der angeschlagene Gegenstand 14 bereits beim Absenken des Anschlagglieds, wenn sich dieses noch oberhalb der Bewegungsebene 18 befindet, in Arbeitsbewegungsrichtung weitertransportierbar ist. Es ist möglich, dass angeschlagene Gegenstände 14, die sich auf ständig in Betrieb stehenden Fördereinrichtungen 70 befinden, bereits durch ihren Druck, den sie dadurch auf das Anschlagglied 16 ausüben, bewirken, dass dieses sich in Arbeitsbewegungsrichtung 13 verschwenkt.

Gleichzeitig läuft der Führungsbolzen 52 im Führungsbereich 54 der Führungsnuten 51 schräg nach unten entgegen der Arbeitsbewegungsrichtung 13. Durch diesen Verlauf der jeweiligen Führungsbereiche 54 wird erreicht, dass bereits beim Absenken des Anschlagglieds die Kolbenstange 42 wieder aus dem Dämpfungszylinder 38 herausgezogen wird. Das untere Ende der jeweiligen Führungsbereiche 54 bildet schließlich die Freigabestellung 25. In der Freigabestellung 25 ist das Anschlagglied vollständig unterhalb der Bewegungsebene 18 angeordnet, so dass ein angeschlagener Gegenstand 14 über das Anschlagmodul 11 hinaus weitertransportiert werden kann. Beim anschließenden Hochfahren des Anschlagglieds, um einen nachfolgenden Gegenstand 14 zu stoppen bzw. zu vereinzeln, bleibt die Kolbenstange 42 in ihrer ausgestellten Position, so dass das Anschlagglied automatisch wieder in die in Figur 10A gezeigte Voranschlagstellung 19 positioniert wird.

Figur 8 zeigt ein zweites Ausführungsbeispiel des erfindungsgemäßen Anschlagmoduls 11, das sich vom ersten Ausführungsbeispiel dadurch unterscheidet, dass an Stelle eines elektrischen Linearantriebs ein fluidischer Linearantrieb verwendet wird. Vorzugsweise wird ein pneumatischer Linearantrieb verwendet. In diesem Fall ist ein Antriebselement 24 in Form eines Antriebskolbens vorgesehen, der linear verschieblich in der Antriebsaufnahme 26 geführt ist. Am Antriebskolben ist dann wieder in bereits vorstehend beschriebener Weise der erste Hebel 28 angelenkt. Zum Antrieb des Antriebskolbens zum Zwecke des Absenkens des Anschlagglieds 16 wird die dem ersten Hebel 28 zugewandte Kolbenseite über einen Zuführkanal 57 mit Druckluft beaufschlagt, wodurch sich der Antriebskolben in Arbeitsbewegungsrichtung 13 bewegt. Die Antriebsaufnahme 26 ist mit einem Deckel 58 verschlossen, so dass eine Kolbenkammer gebildet wird, in der der Antriebskolben geführt ist. Zur Rückbewegung des Kolbens in seine in Figur 8 dargestellte Stellung wird die gegenüberliegende Kolbenseite mit Druckluft beaufschlagt.

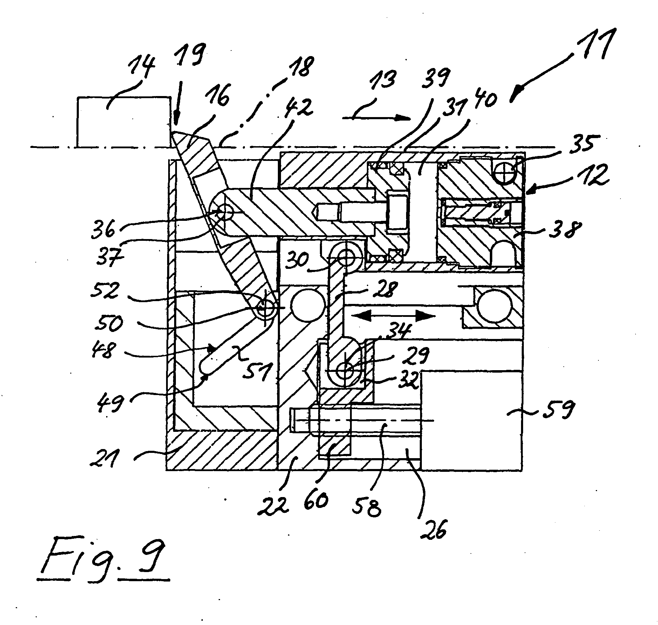

Figur 9 zeigt ein drittes Ausführungsbeispiel des erfindungsgemäßen Antriebsmoduls 11, das sich von den zuvor beschriebenen Ausführungsbeispielen dadurch unterscheidet, dass ein elektrischer Dreh-Linearantrieb in Form eines Spindelantriebs eingesetzt wird. Der Spindelantrieb besitzt eine drehbar angetriebenes Antriebselement 24 in Form einer Spindelmutter, die gleichzeitig parallel zur Bewegungsebene 18 linear verschieblich am Spindelmotor 59 gelagert ist. An der Spindelmutter 58 befindet sich ein Mitnehmer 60, der durch die Linearverschiebung der Spindelmutter 58 ebenfalls linear mit verschoben wird. An den Mitnehmer 60 ist wiederum der erste Hebel 28 angelenkt.

## Patentansprüche

1. Anschlagmodul, insbesondere für automatische Bearbeitungs- und Fördereinrichtungen, mit einem an einer Grundeinheit (15) angeordneten Anschlagglied (16) für sich in einer Bewegungsebene (18) in einer aktuellen Arbeitsbewegungsrichtung (13) bewegende Gegenstände (14), das mittels eines Stellglieds (17) zwischen einer in der Bewegungsebene (18) befindlichen Anschlagstellung (20) und einer unterhalb der Bewegungsebene (18) liegenden Freigabestellung (25) bewegbar ist, wobei eine Führungseinrichtung (48) vorgesehen ist, mit wenigstens einer Führungsbahn (49) auf der das Anschlagglied (16) an einer ersten Stelle (50) zwischen der Anschlagstellung (20) und der Freigabestellung (25) zwangsgeführt ist, wobei das Anschlagglied (16) an einer von der ersten Stelle (50) entfernten zweiten Stelle (36) mit einem Stellelement derart schwenkbar verbunden ist, dass bei einer Absenkbewegung des Anschlagglieds (16) von der Anschlagstellung (20) in die Freigabestellung (25) ein Verschwenken des Anschlagglieds (16) in Arbeitsbewegungsrichtung (13) erfolgt, wobei das Stellglied (17) über Kraftübersetzungsmittel in Form einer Hebeleinrichtung (27) mit dem Anschlagglied (16) gekoppelt ist, **dadurch gekennzeichnet, dass** eine vom Stellglied (17) erzeugte Antriebskraft in eine am Anschlagglied (16) abgreifbare größere Kraft übersetzbar ist, wobei die Hebeleinrichtung (27) einen ersten Hebel (28), der einerseits gelenkig am Stellglied (17) gelagert und linear verschieblich ist und andererseits an einem zweiten Hebel (31) gelenkig gelagert ist, aufweist, wobei Letzterer einerseits um eine an der Grundeinheit (15) ausgebildete, ortsfeste Schwenkachse (35) schwenkbar und andererseits gelenkig am Anschlagglied (16) gelagert ist.

2. Anschlagmodul nach Anspruch 1, **dadurch gekennzeichnet, dass** die Führungsbahn (49) zumindest teilweise schräg zur Bewegungsebene (18) verläuft.

3. Anschlagmodul nach Anspruch 1 oder 2, **dadurch gekennzeichnet, dass** das Anschlagglied (16) an seinem oberen Ende eine Anschlagkontur aufweist, die bei der Bewegung des Anschlagglieds (16) zwischen der Anschlagstellung (20) und der Freigabestellung (25) eine Bahnkurve (75) durchläuft.

4. Anschlagmodul nach einem der vorhergehenden Ansprüche, **dadurch gekennzeichnet, dass** die Führungseinrichtung (48) eine Kulissenführung aufweist, mit wenigstens einer in der Grundeinheit (15) ausgebildeten Führungskulisse, in der wenigstens ein am Anschlagglied (16) angeordnetes Führungsglied zwangsgeführt ist.

5. Anschlagmodul nach einem der vorhergehenden Ansprüche, **gekennzeichnet durch** eine mit dem Anschlagglied (16) verbundene Dämpfungseinrichtung (12) zur gedämpften Bewegung des Anschlagglieds von einer in Arbeitsbewegungsrichtung (13) vor der Anschlagstellung (20) liegenden Voranschlagstellung (19) bis zur Anschlagstellung (20).

6. Anschlagmodul nach einem der vorhergehenden Ansprüche, **dadurch gekennzeichnet, dass** der zweite Hebel von einem Dämpfungszylinder (38) der Dämpfungseinrichtung (12) gebildet ist.

7. Anschlagmodul nach einem der vorhergehenden Ansprüche, **dadurch gekennzeichnet, dass** das Stellglied (17) ein Antriebselement (24) zur Erzeugung einer parallel zur Bewegungsebene (18) gerichteten linearen Antriebsbewegung aufweist, die über Umsetzmittel in eine zwischen der Anschlagstellung (20) und der Freigabestellung (25) des Anschlagglieds stattfindenden Auf- bzw. Abwärtsbewegung umsetzbar ist.

8. Anschlagmodul nach Anspruch 7, **dadurch gekennzeichnet, dass** das Antriebselement (24) in einer parallel zur Bewegungsebene (18), in der Grundeinheit (15) ausgebildeten Antriebsaufnahme (26) linear verschieblich angeordnet ist.

9. Anschlagmodul nach Anspruch 8, **dadurch gekennzeichnet, dass** das Stellglied (17) mit seiner Längsseite im Wesentlichen parallel zur Bewegungsebene (18) ausgerichtet in der Antriebsaufnahme (26) angeordnet ist.

## Claims

1. Stop module, in particular for automatic machining and conveyor devices, with a stop element (16) arranged on a base unit (15) for objects (14) moving in a movement plane (18) in a current working movement direction (13), which module can be moved by means of an actuator (17) between a stop position (20) in the movement plane (18) and a release position (25) lying below the movement plane (18), wherein a guide device (48) is provided, with at least one guide path (49) on which the stop element (16) is force guided at a first point (50) between the stop position (20) and the release position (25), wherein the stop element (16) is connected swivelable with an actuator at a second point (36) remote from the first point (50) such that on a lowering movement of the stop element (16) from the stop position (20) into the release position (25), a swivelling of the stop element (16) takes place in the working movement direction (13), wherein the actuator (17) is coupled with the stop element (16) via force translation means in the form of a lever device (27), **characterised in that** a drive force generated by the actuator (17) can be translated into a greater force that can be tapped at the stop element (16), wherein the lever device (27) has a first lever (28) which is firstly mounted articulated on the actuator (17) and linearly displaceable and secondly is mounted articulated on a second lever (31), wherein the latter firstly can be swivelled about a stationary swivel axis (35) formed on the base unit (15) and secondly is mounted articulated on the stop element (16).

2. Stop module according to Claim 1, **characterised in that** the guide path (49) runs at least partly obliquely to the movement plane (18).

3. Stop module according to Claim 1 or 2, **characterised in that** the stop element (16) at its upper end has a stop contour which on movement of the stop element (16) between the stop position (20) and release position (25) describes a curved path (75).

4. Stop module according to any one of the preceding claims, **characterised in that** the guide device (48) has a link guide with at least one guide link formed in the base unit (15) in which is force-guided at least one guide element arranged on the stop element (16).

5. Stop module according to any one of the preceding claims, **characterised by** a damping device (12) connected to the stop element (16) for damped movement of the stop element from a pre-stop position (19) lying in front of the stop position (20) in the working movement direction (13) up to the stop position (20).

6. Stop module according to any one of the preceding claims, **characterised in that** the second lever is formed by a damping cylinder (38) of the damping device (12).

7. Stop module according to any one of the preceding claims, **characterised in that** the actuator (17) has a drive element (24) for generating a linear drive movement directed parallel to the movement plane (18), which drive movement can be converted via conversion means into an upward or downward movement taking place between the stop position (20) and the release position (25) of the stop element.

8. Stop module according to Claim 7, **characterised in that** the drive element (24) is arranged linearly displaceable in a drive holder (26) formed in the base unit (15) parallel to the movement plane (18).

9. Stop module according to Claim 8, **characterised in that** the actuator (17) is arranged in the drive holder (26) with its long side aligned substantially parallel to the movement plane (18).

## Revendications

1. Module de butée, en particulier pour des dispositifs automatiques de convoyage et de traitement, comportant un organe de butée (16) pour des objets (14) défilant dans un plan de défilement (18) dans une direction de travail (13) actuelle, lequel est disposé sur une unité de base (15) et est apte à se déplacer au moyen d'un composant de réglage (17) entre une position de butée (20) située dans le plan de défilement (18) et une position de déblocage (25) située en dessous du plan de défilement (18), sachant qu'il est prévu un dispositif de guidage (48) avec au moins une voie de guidage (49) sur laquelle l'organe de butée (16) au niveau d'un premier emplacement (50) subit un guidage forcé entre la position de butée (20) et la position de déblocage (25), l'organe de butée (16), au niveau d'un deuxième emplacement (36) éloigné du premier emplacement (50), étant relié à un élément de réglage de manière à pouvoir pivoter, de telle sorte que, lorsque l'organe de butée (16) est déplacé vers le bas depuis la position de butée (20) dans la position de déblocage (25), l'organe de butée (16) pivote dans la direction de travail (13), le composant de réglage (17) étant couplé à l'organe de butée (16) par des moyens de transmission de force formés par un dispositif de levier (27), **caractérisé en ce qu'**une force d'actionnement, générée par le composant de réglage (17), peut être transformée en une force plus grande pouvant être prélevée sur l'organe de butée (16), le dispositif de levier (27) comportant un premier levier (28) qui, sur un côté, est monté de manière articulée contre le composant de réglage (17) et est mobile linéairement et, sur l'autre côté, est monté de manière articulée sur un deuxième levier (31), ce dernier étant, d'une part, apte à pivoter autour d'un axe de pivotement (35) stationnaire, réalisé sur l'unité de base (15) et, d'autre part, monté de manière articulée sur l'organe de butée (16).

2. Module de butée selon la revendication 1, **caractérisé en ce que** la voie de guidage (49), en partie au moins, est inclinée par rapport au plan de défilement (18).

3. Module de butée selon la revendication 1 ou 2, **caractérisé en ce que** l'organe de butée (16) possède, au niveau de son extrémité supérieure, un contour de butée qui passe à travers une courbe (75) au moment du déplacement de l'organe de butée (16) entre la position de butée (20) et la position de déblocage (25).

4. Module de butée selon l'une quelconque des revendications précédentes, **caractérisé en ce que** le dispositif de guidage (48) comporte une glissière à coulisse avec au moins une coulisse de guidage, qui est réalisée dans l'unité de base (15) et dans laquelle au moins un composant de guidage, disposé sur l'organe de butée (16), subit un guidage forcé.

5. Module de butée selon l'une quelconque des revendications précédentes, **caractérisé par** un dispositif d'amortissement (12), relié à l'organe de butée (16), en vue d'un déplacement amorti de l'organe de butée depuis une position de butée préliminaire (19), située en amont de la position de butée (20) par référence à la direction de travail (13), jusque dans la position de butée (20).

6. Module de butée selon l'une quelconque des revendications précédentes, **caractérisé en ce que** le deuxième levier est formé par un cylindre d'amortissement (38) du dispositif d'amortissement (12).

7. Module de butée selon l'une quelconque des revendications précédentes, **caractérisé en ce que** le composant de réglage (17) comporte un actionneur (24) destiné à générer un mouvement d'actionnement linéaire, qui est orienté parallèlement au plan de défilement (18) et qui, par des moyens de transformation, peut être transformé en un mouvement vers le haut ou le bas se produisant entre la position de butée (20) et la position de déblocage (25) de l'organe de butée.

8. Module de butée selon la revendication 7, **caractérisé en ce que** l'actionneur (24) est disposé de manière mobile linéairement dans un logement (26) réalisé dans l'unité de base (15) parallèlement au plan de défilement (18).

9. Module de butée selon la revendication 8, **caractérisé en ce que** le composant de réglage (17) est disposé dans le logement (26) en étant orienté avec son côté longitudinal sensiblement parallèlement au plan de défilement (18).
